# EUROPÄISCHE PATENTSCHRIFT

(11) **EP 2 134 630 B1**
(45) Veröffentlichungstag und Bekanntmachung des Hinweises auf die Patenterteilung: **11.12.2019**
(21) Anmeldenummer: 08735652.3
(22) Anmeldetag: 01.04.2008
(51) Int. Cl.: B65G 15/60, B65G 21/06, G01G 11/00

(54) **WÄGE-FÖRDERVORRICHTUNG**
WEIGHING CONVEYING DEVICE
DISPOSITIF DE TRANSPORT ET DE PESAGE

(30) Priorität: 17.04.2007 DE 102007020311
(43) Veröffentlichungstag der Anmeldung: 23.12.2009
(73) Patentinhaber: Bizerba SE & Co. KG, 72336 Balingen (DE)
(72) Erfinder: BERGER, Hermann, 31079 Adenstedt (DE)
(74) Vertreter: Hoeger, Stellrecht & Partner Patentanwälte mbB
(86) Internationale Anmeldenummer: PCT/EP2008/053880
(87) Internationale Veröffentlichungsnummer: WO 2008/125484

(56) Entgegenhaltungen:
- EP-A- 0 481 944
- EP-A- 0 512 115
- EP-A1- 0 592 349
- DE-A1- 10 249 870
- DE-A1- 19 925 277
- US-A- 3 743 039
- US-A- 5 170 857
- US-A- 5 304 745
- US-A- 5 915 527
- US-A1- 2002 157 877
- US-B1- 6 509 533
- US-B1- 7 114 615

## Beschreibung

Die Erfindung betrifft eine Wäge-Fördervorrichtung zum Wiegen und zum Transport von Wägegut, mit einer Fördereinrichtung, auf welcher Wägegut positionierbar ist, und einer Wägeeinrichtung, durch welche das Gewicht von Wägegut auf der Fördereinrichtung ermittelbar ist, wobei die Fördereinrichtung ein Förderband, eine Trägereinrichtung, an welcher das Förderband geführt ist, und mindestens eine Transportwalze für das Förderband aufweist.

Durch eine Wäge-Fördervorrichtung lässt sich während des Transports von Wägegut das Gewicht des Wägeguts ermitteln. Die Gewichtsermittlung kann dabei kontinuierlich während des Transports erfolgen oder der Transport kann kurz unterbrochen sein, um das Gewicht zu bestimmen.

Durch die Trägereinrichtung, an welcher das Förderband geführt ist, wird das Förderband und damit auch das Wägegut gestützt.

Aus der DE 196 18 506 A1 ist ein Förderband insbesondere für einen Wägebandförderer bekannt, welcher einen um zwei Rollen geführten antreibbaren Endlosgurt und eine Auflageplatte zur Unterstützung des das zu fördernde Gut tragenden oberen Gurttrums umfasst. Die Auflageplatte ist als Verbundplatte ausgebildet, welche einen Kern mit wenigstens einer Schicht aus einem druckfesten Material mit geringem spezifischem Gewicht und zumindest eine obere und eine untere Deckschicht aus einem zugfesten Material aufweist.

Aus der JP 2000-153911 A ist ein Förderband bekannt, welches herausragende Elemente aufweist, um eine Adhäsion von Artikeln zu vermeiden.

Aus der DE 199 25 277 A1 ist eine Transporteinrichtung bekannt, die sich auf dem Lastaufnehmer einer Waage abstützt, mit einem umlaufenden elastischen Förderband, das über zwei an der Transporteinrichtung gelagerte Umlenkrollen läuft, und mit einer Gleitplatte, die den oberen Teil des Förderbands zwischen den Umlenkrollen stützt. Die Gleitplatte ist auf beiden Seiten in der Nähe der Umlenkrolle mit der Transporteinrichtung verbunden und kann dazwischen unter der Wirkung der Last auf dem Förderband federnd nachgeben.

Aus der DE 197 36 092 A1 ist ein Abriebförderer für Bandübergaben bekannt, insbesondere für die in den Förderstrecken im untertägigen Berg- und Tunnelbau verlegten Bandanlagen. Er umfasst eine niedrigbauende, unter der Bandübergabe verlegte Auffangwanne und ein über Antriebe verfügendes, als über die Antriebs- und Umlenkrolle gespanntes Gummiband ausgebildetes Förderaggregat, das den Abrieb in Richtung zur Abwurftrommel der Bandübergabe langsam oder taktweise transportierend ausgebildet ist. Das Gummiband ist in geringem Abstand zum Ober- und zum Bodenblech der Auffangwanne geführt angeordnet und weist auf der Transportseite im Abstand zueinander angeordnete und ein zur als Übergabe dienenden Umlenkrolle oder zur als Übergabe dienenden Antriebsrolle offenes V bildend angeordnete Aufsatzstege auf.

Aus der DE 10 2004 020 195 A1 ist eine Vorrichtung zur Behandlung von Lebensmitteln mit einer Behandlungszone, in der ein Transportband zum Fördern der Lebensmittel durch die Behandlungszone angeordnet ist, bekannt. Das Transportband ist durch ein Gestell unterstützt und auf dem Gestell sind Gleitschienen angebracht, über die das Transportband geführt ist. Die Gleitschienen sind als selbsttragende Elemente ausgebildet.

Die EP 0 481 944 A1 und die EP 0 512 115 A1 offenbaren ein Förderband für gravimetrische Messungen an einem Materialfluss.

Die US 7,114,615 B1 offenbart eine Endklammer zur Verwendung in einem Förderbandsystem.

Der Erfindung liegt die Aufgabe zugrunde, eine Wäge-Fördervorrichtung der eingangs genannten Art bereitzustellen, welche auf einfache Weise herstellbar und wartbar ist und welche eine hohe Genauigkeit bei der Gewichtsermittlung hat.

Diese Aufgabe wird bei der eingangs genannten Wäge-Fördervorrichtung erfindungsgemäß dadurch gelöst, dass die Trägereinrichtung einen Trägerkörper mit einer Trägerplatte aufweist, an welcher gegenüberliegende Seitenwangen gebildet sind, wobei der Trägerkörper mit der Trägerplatte und den Seitenwangen aus einem einzigen Metallblech hergestellt ist, und dass durch die gegenüberliegenden Seitenwangen die mindestens eine Transportwalze gehalten ist, dass an dem Trägerkörper Stabilisierungsstreben angeordnet sind, wobei eine erste Stabilisierungsstrebe und eine zweite Stabilisierungsstrebe jeweils mit gegenüberliegenden stirnseitigen Querstreben verbunden ist und zwischen der ersten Stabilisierungsstrebe und der zweiten Stabilisierungsstrebe ein Verbindungssteg angeordnet ist, welcher mit der ersten Stabilisierungsstrebe und der zweiten Stabilisierungsstrebe verbunden ist, dass die erste Stabilisierungsstrebe, der Verbindungssteg und die zweite Stabilisierungsstrebe einstückig zu einer Strebenkombination verbunden sind, dass die Strebenkombination ein U-Profil oder C-Profil mit einer Profilerstreckungsrichtung im Wesentlichen parallel zu einer Transportrichtung hat, und dass der Verbindungssteg mindestens eine durchgehende Ausnehmung aufweist, durch welche ein Raum, welcher durch den Trägerkörper, die erste Stabilisierungsstrebe, die zweite Stabilisierungsstrebe und den Verbindungssteg begrenzt ist, nach außen offen ist.

Die entsprechende Trägereinrichtung lässt sich auf einfache Weise insbesondere aus einem (einzigen) Metallblech herstellen, wobei die Seitenwangen beispielsweise durch Umbiegen oder Abkanten herstellbar sind und insbesondere an der Trägerplatte angeformt sind. Dadurch wiederum lässt sie sich mit geringem Gewicht ausbilden. Die Vorlast, welche die Trägereinrichtung dann auf die Wägeeinrichtung ausübt, ist dementsprechend gering. Dadurch wiederum lässt sich die Genauigkeit der Gewichtsermittlung erhöhen.

Ferner lässt sich durch die erfindungsgemäße Lösung die Trägereinrichtung ohne Hohlräume, Deckschichten und dergleichen ausbilden. Dadurch sind Bakteriennester vermieden. Die Trägereinrichtung gemäß der erfindungsgemäßen Lösung lässt sich auf einfache Weise reinigen. Dadurch ist ein Einsatz auch im Lebensmittelbereich und im Pharmabereich möglich.

Insbesondere wirkt die Trägereinrichtung mit der mindestens einen Transportwalze als Vorlast für die Wägeeinrichtung. Durch die erfindungsgemäße Lösung lässt sich die Trägereinrichtung mit geringem Gewicht ausbilden und dadurch lässt sich auch die Vorlast gering halten. Dadurch erhält man eine höhere Messgenauigkeit.

Günstig ist es, wenn der Trägerkörper durch eine Trägerplatte und die Seitenwangen gebildet ist. Ein solcher Trägerkörper lässt sich einstückig beispielsweise aus einem Metallblech herstellen. Er lässt sich insbesondere einstückig zusammenhängend herstellen. Es lässt sich dadurch eine Trägereinrichtung mit geringem Gewicht und hoher Torsionssteifigkeit realisieren.

Es ist günstig, wenn die Seitenwangen an dem Trägerkörper angeformt sind und insbesondere jeweils ein seitliches Ende des Trägerkörpers bilden. Die Seitenwangen ragen über den Trägerkörper hinaus. Sie sind beabstandet zueinander und definieren die seitlichen Abmessungen des Trägerkörpers. Die Seitenwangen lassen sich zur Fixierung der mindestens einen Transportwalze nutzen. Zwischen den Seitenwangen wiederum ist ein Freiraum gebildet, in welchem sich Streben zur Erhöhung der Steifigkeit des Trägerkörpers positionieren lassen. Der Trägerkörper und damit die Trägereinrichtung lässt sich dadurch bei minimiertem Gewicht mit hoher Steifigkeit ausbilden.

Ganz besonders vorteilhaft ist es, wenn der Trägerkörper aus einem (einzigen) Metallblech wie beispielsweise einem Edelstahlblech hergestellt ist. Der Trägerkörper und damit die Trägereinrichtung lässt sich dadurch auf einfache und kostengünstige Weise fertigen. Der Trägerkörper lässt sich mit geringem Gewicht herstellen. Ferner ist eine einfache Reinigung möglich. Es lassen sich Standardmaterialien wie Edelstahlbleche einsetzen, welche nichtkorrosiv sind.

Ein geringes Gewicht der Trägereinrichtung lässt sich erzielen, wenn das Metallblech eine Dicke von höchstens 4 mm und insbesondere von höchstens 2 mm aufweist. Es wurde ein Trägerkörper realisiert, bei welchem das Metallblech eine Dicke von 1,5 mm aufweist, der eine ausreichende Ebenheit aufweist. Das Vorlast-Gewicht, welches auf die Wägeeinrichtung wirkt, lässt sich dadurch gering halten.

Günstig ist es, wenn die Seitenwangen durch Biegen und/oder Abkanten des Metallblechs hergestellt sind. Der Trägerkörper lässt sich dadurch auf einfache und kostengünstige Weise herstellen.

Es hat sich als günstig erwiesen, wenn der Trägerkörper eine Breite quer zu einer Transportrichtung von mindestens 100 mm aufweist. Es lässt sich dadurch insbesondere ein einstückiger Trägerkörper herstellen. Dieser lässt sich mit hoher Steifigkeit realisieren.

Günstig ist es, wenn der Trägerkörper zusammenhängend ist und insbesondere eine Trägerplatte des Trägerkörpers einstückig zusammenhängend ist. Wenn der Trägerkörper an der Trägerplatte keine Durchbrechungen, Spalte usw. aufweist, dann lässt er sich mit entsprechend hoher Steifigkeit realisieren.

Insbesondere weist der Trägerkörper eine mindestens für die Einhüllende im Wesentlichen ebene Oberseite zur Führung eines oberen Förderbandtrums auf. Diese Oberseite bildet eine Gleitfläche für das Förderband. Durch den Trägerkörper wird dann das Förderband und damit auch das Wägegut abgestützt. Bei der erfindungsgemäßen Lösung lässt sich der Trägerkörper biegesteif und torsionssteif mit einer ebenen Oberseite herstellen. Dadurch werden Beschleunigungskräfte bei der Führung des Förderbands an dem Trägerkörper vermieden, so dass das Gewichtsergebnis nicht verfälscht wird. Es kann dabei vorgesehen sein, dass die Oberseite des Trägerkörpers nicht-durchgehende Vertiefungen beispielsweise in der Form von Riffelungen aufweist. Diese Vertiefungen dienen dazu, eine Ansaugung des Förderbands an der Oberseite des Trägerkörpers zu verhindern. In diesem Falle ist nicht die Oberseite eben und glatt, sondern die Einhüllende der Oberseite ist eine ebene Fläche.

Günstig ist es, wenn an den Seitenwangen jeweils ein Fixierungsbereich angeordnet oder gebildet ist, welcher über eine Trägerplatte des Trägerkörpers zur Fixierung der mindestens einen Transportwalze hinausragt. An dem Fixierungsbereich ist die mindestens eine Trägerwalze fixiert. Eine obere Hüllfläche der Trägerwalze liegt dabei im Wesentlichen auf der gleichen Ebene wie die Trägerplatte des Trägerkörpers. Über die Fixierungsbereiche lässt sich die mindestens eine Transportwalze mit geringem Abstand zu der Trägerplatte montieren. Die Fixierungsbereiche können einstückig an den Seitenwangen gebildet sein oder nachträglich an den Seitenwangen fixiert sein. Bei nachträglich montierten Fixierungsbereichen sind diese vorzugsweise so montierbar, dass Toleranzen bei der Fertigung korrigierbar sind, um eine exakte Ausrichtung zwischen der mindestens einen Transportwalze und der Trägerplatte zu ermöglichen.

Ein Fixierungsbereich kann aus dem gleichen Material wie die Trägerplatte hergestellt sein, jedoch mit größerer Dicke. Dadurch erhält man eine höhere Stabilität für die Fixierung der mindestens einen Transportwalze.

Es ist günstig, wenn mindestens eine Transportwalze an den Seitenwangen feststellbar verschieblich angeordnet ist. Dadurch lässt sich das Förderband spannen.

Ganz besonders vorteilhaft ist es, wenn vor einem stirnseitigen Ende einer Trägerplatte des Trägerkörpers eine erste Transportwalze angeordnet ist. Dadurch lässt sich der Abstand zwischen der Transportwalze und der Trägerplatte gering halten.

Aus dem gleichen Grund ist es günstig, wenn vor (bezogen auf eine Transportrichtung für Wägegut "nach") einem stirnseitigen zweiten Ende der Trägerplatte des Trägerkörpers, welches dem ersten Ende gegenüberliegt, eine zweite Transportwalze angeordnet ist.

Insbesondere hat der Trägerkörper mit den Seitenwangen ein C-Profil oder U-Profil und ist beispielsweise wannenförmig ausgebildet. Es lässt sich dadurch eine hohe Biegesteifigkeit und Torsionssteifigkeit erreichen. Die mindestens eine Transportwalze lässt sich auf einfache Weise an dem Trägerkörper fixieren.

Ganz besonders vorteilhaft ist es, wenn im Bereich eines stirnseitigen ersten Endes an dem Trägerkörper eine Querstrebe angeordnet ist, welche mit den Seitenwangen verbunden ist und sich zwischen den Seitenwangen erstreckt. Durch diese Querstrebe lässt sich der Trägerkörper, auch wenn dieser aus einem Blechmaterial hergestellt ist, mit hoher Biegesteifigkeit und Torsionssteifigkeit realisieren. Ferner lässt sich eine Trägerplatte des Trägerkörpers unterstützen, um eine hohe Ebenheit zu erreichen. Dadurch wiederum lassen sich Beschleunigungskräfte des Förderbands bei der Führung an dem Trägerkörper vermeiden und man erhält eine hohe Genauigkeit für die Gewichtsermittlung von Wägegut. Diese hohe Genauigkeit ist ferner dadurch sichergestellt, dass die Vorlast, mit welcher die Trägereinrichtung auf die Wägeeinrichtung wirkt, gering gehalten werden kann durch eine gewichtsminimierende Ausbildung des Trägerkörpers.

Aus dem gleichen Grund ist es günstig, wenn im Bereich eines stirnseitigen ersten Endes und/oder zweiten Endes an dem Trägerkörper eine erste Querstrebe bzw. eine zweite Querstrebe angeordnet ist, welche jeweils mit den Seitenwangen verbunden sind und sich zwischen den Seitenwangen erstrecken.

Ganz besonders vorteilhaft ist es, wenn die entsprechende Querstrebe mit den Seitenwangen verschweißt (insbesondere laserverschweißt) oder verklebt ist. Dadurch erhält man eine sichere Verbindung, welche eine hohe Biegesteifigkeit und Torsionssteifigkeit des Trägerkörpers ermöglicht.

Es kann zusätzlich oder alternativ vorgesehen sein, dass die Querstrebe mindestens einen Zapfen aufweist, welcher in einer entsprechenden Ausnehmung einer Seitenwange positioniert ist. Es lässt sich dadurch eine Zapfen-Ausnehmungs-Verbindung zwischen einer Seitenwange und der Querstrebe realisieren.

Es kann auch vorgesehen sein, dass die Querstrebe einstückig mit dem Trägerkörper verbunden ist. Solche einstückig angeformten Querstreben sind mit den Seitenstreben beispielsweise über Verschweißen (insbesondere Laserschweißen) oder Verkleben verbunden.

Es ist insbesondere vorgesehen, dass die erste Querstrebe und/oder die zweite Querstrebe mit einer Unterseite des Trägerkörpers verbunden (beispielsweise verschweißt oder verklebt) sind und insbesondere im Bereich von Brücken verbunden sind. Dadurch wird eine Trägerplatte des Trägerkörpers gestützt. Dadurch wiederum lassen sich das Förderband und Wägegut stützen, wobei durch diese Querstrebenstützung die Ebenheit einer Oberseite des Trägerkörpers garantiert ist.

Es ist insbesondere günstig, wenn die Querstrebe mit der Unterseite verschweißt oder verklebt ist. Dadurch erhält man eine sichere Stützung.

Es kann auch vorgesehen sein, dass die Querstrebe mindestens einen Zapfen aufweist, welcher in einer entsprechenden Ausnehmung des Trägerkörpers positioniert ist. Dadurch lässt sich eine Zapfen-Ausnehmungs-Verbindung zwischen einer Querstrebe und dem Trägerkörper realisieren.

Ganz besonders vorteilhaft ist es, wenn die Querstrebe zu einer Unterseite des Trägerkörpers hin mindestens einen durchgehenden Freibereich aufweist. Die entsprechende Querstrebe ist dann nicht über ihre ganze Länge mit dem Trägerkörper verbunden, sondern über einen oder mehrere beabstandete Bereiche. Durch den Freibereich sind Hohlräume, Labyrinthe, Hinterschnitte und dergleichen an einer Unterseite des Trägerkörpers vermieden. Dadurch ist die Gefahr der Ausbildung von Bakteriennestern verringert. Die Trägereinrichtung lässt sich auf einfache Weise reinigen.

Insbesondere liegt ein Freibereich zwischen benachbarten Zapfen oder Brücken.

Es hat sich als günstig erwiesen, wenn ein Freibereich eine Länge von mindestens 4 mm aufweist. Dadurch ist eine einfache und sichere Reinigung ermöglicht.

Es ist ferner günstig, wenn ein Zapfen einen Eintauchbereich in die entsprechende Ausnehmung am Trägerkörper aufweist. Über diesen Eintauchbereich lässt sich der Zapfen an dem Trägerkörper fixieren.

Der Eintauchbereich weist dabei eine Höhe auf, welche höchstens so groß ist wie die Dicke des Trägerkörpers an der zugeordneten Ausnehmung. Der Zapfen ragt dann nicht über eine Oberseite des Trägerkörpers hinaus.

Es ist ferner günstig, wenn einem Zapfen ein Anlagebereich an den Trägerkörper zugeordnet ist, über welchem der Eintauchbereich absteht. Über den Anlagebereich ist eine Anlage der entsprechenden Strebe an den Trägerkörper möglich. Über den Anlagebereich kann eine Schweißverbindung oder Klebeverbindung erfolgen.

Günstig ist es, wenn die erste Querstrebe und/oder die zweite Querstrebe aus einem Metallblech hergestellt sind. Die Querstreben lassen sich dadurch auf einfache und kostengünstige Weise herstellen.

An dem Trägerkörper sind Stabilisierungsstreben angeordnet, welchejeweils mit stirnseitigen Querstreben verbunden sind. Durch Stabilisierungsstreben lassen sich die Biegesteifigkeit und Torsionssteifigkeit des Trägerkörpers erhöhen. Ferner lässt sich eine zumindest punktuelle Stützung einer Trägerplatte des Trägerkörpers erreichen, um deren Ebenheit zu garantieren.

Beispielsweise ist mindestens eine Diagonal-Stabilisierungsstrebe vorgesehen. Diese verläuft diagonal an einer Unterseite des Trägerkörpers.

Es ist dann vorteilhaft, wenn die mindestens eine Diagonal-Stabilisierungsstrebe mit einem Eckbereich der mindestens einen Seitenwange und/oder einem Eckbereich der mindestens einen Querstrebe verbunden ist. Dadurch lässt sich ein Trägerkörper mit hoher Biegesteifigkeit und Torsionssteifigkeit sowie optimierter Stützung einer Trägerplatte realisieren.

Es ist ferner günstig, wenn eine erste Diagonal-Stabilisierungsstrebe und eine zweite Diagonal-Stabilisierungsstrebe vorgesehen sind, welche miteinander verbunden sind. Dadurch lässt sich ein Ausknicken verhindern.

Es ist insbesondere vorteilhaft, wenn die erste Diagonal-Stabilisierungsstrebe und die zweite Diagonal-Stabilisierungsstrebe in einem Bereich verbunden sind, welcher bezogen auf eine Querrichtung zu einer Transportrichtung den Trägerkörper mittig stützt. Dadurch wird der Trägerkörper durch die Diagonal-Stabilisierungsstreben in der neutralen Faser gestützt und man erhält eine hohe Torsionssteifigkeit. Der Stützbereich der Diagonal-Stabilisierungsstreben, an welchem diese sich schneiden, liegt in der Mitte des Trägerkörpers auf der neutralen Faser.

Stabilisierungsstreben sind mit gegenüberliegenden stirnseitigen Querstreben verbunden ist. Solche Stabilisierungsstreben lassen sich auf einfache Weise mit den Querstreben beispielsweise durch Schweißen und/oder Kleben und/oder über Zapfen-Ausnehmungs-Verbindungen koppeln.

Es ist eine erste Stabilisierungsstrebe und eine zweite Stabilisierungsstrebe jeweils mit gegenüberliegenden stirnseitigen Querstreben verbunden und zwischen der ersten Stabilisierungsstrebe und der zweiten Stabilisierungsstrebe ist ein Verbindungssteg angeordnet, welcher mit der ersten Stabilisierungsstrebe und der zweiten Stabilisierungsstrebe verbunden ist. Man erreicht dadurch eine hohe Biegesteifigkeit und Torsionssteifigkeit des Trägerkörpers.

Die erste Stabilisierungsstrebe, der Verbindungssteg und die zweite Stabilisierungsstrebe sind einstückig zu einer Strebenkombination verbunden. Eine solche Strebenkombination lässt sich auf einfache Weise fertigen und mit dem Trägerkörper verbinden. Sie ist insbesondere aus einem Metallblech hergestellt.

Es ist insbesondere vorteilhaft, wenn der Verbindungssteg mittig bezogen auf eine Querrichtung zu einer Transportrichtung am Trägerkörper angeordnet ist. Es lässt sich dadurch erreichen, dass der Trägerkörper in seiner Mitte gestützt wird. Eine neutrale Faser liegt dann in dem Stützbereich. Dadurch erhält man eine hohe Torsionssteifigkeit.

Die Strebenkombination hat ein U-Profil oder C-Profil. Das U-Profil oder C-Profil hat eine Profilerstreckungsrichtung im Wesentlichen parallel zu einer Transportrichtung. Der Trägerkörper muss vor allem in der Transportrichtung eine hohe Ebenheit aufweisen. Dies lässt sich durch eine solche Profilform mit einer Profilerstreckungsrichtung parallel zur Transportrichtung erreichen. Weiterhin erhält man durch eine solche Profilausbildung eine hohe Torsionssteifigkeit.

Eine hohe Steifigkeit des Trägerkörpers erhält man, wenn der Verbindungssteg (zusätzlich) mit den stirnseitigen Querstreben verbunden ist.

Ein geschlossener Hohlraum an dem Trägerkörper lässt sich verhindern, wenn der Verbindungssteg mindestens eine vorzugsweise runde Ausnehmung aufweist, durch welche ein Raum, welcher durch den Trägerkörper, die erste Stabilisierungsstrebe, die zweite Stabilisierungsstrebe und den Verbindungssteg begrenzt ist, nach außen offen ist. Dadurch ist ein Zugang in den Raum von außen während der Reinigung möglich. Es können dann Bakteriennester vermieden werden. Die mindestens eine Ausnehmung kann durchgehend sein.

Die mindestens eine Stabilisierungsstrebe ist beispielsweise aus einem Metallblech hergestellt. Sie ist dadurch auf einfache Weise fertigbar.

Günstigerweise sind die mindestens eine Stabilisierungsstrebe und/oder die mindestens eine Seitenwange und/oder die mindestens eine stirnseitige Querstrebe miteinander verschweißt (insbesondere durch Laserschweißen) oder verklebt. Dadurch erhält man eine Verbindung, die eine hohe Biegesteifigkeit und Torsionssteifigkeit für den Trägerkörper ermöglicht.

Es ist günstig, wenn die mindestens eine Stabilisierungsstrebe einen Freibereich aufweist, welcher zu einer Unterseite des Trägerkörpers hin offen ist. Dadurch erhält man eine "punktuelle" Stützung des Trägerkörpers. Über den Freibereich ist eine einfache Reinigung zur Vermeidung von Bakteriennestern ermöglicht.

Es kann auch vorgesehen sein, dass die mindestens eine Stabilisierungsstrebe über einen oder mehrere Zapfen über eine entsprechende Ausnehmung mit dem Trägerkörper und/oder der mindestens einen Seitenwange und/oder der mindestens einen stirnseitigen Querstrebe verbunden ist.

Es ist ein Antriebsmotor für das Förderband vorgesehen. Dieser ist insbesondere außerhalb der Trägereinrichtung an einem Gestell angeordnet, welches die Fördereinrichtung trägt. Dadurch lässt sich das Gewicht der Trägereinrichtung gering halten.

Die nachfolgende Beschreibung bevorzugter Ausführungsformen dient im Zusammenhang mit der Zeichnung der näheren Erläuterung der Erfindung. Es zeigen:
- Figur 1: eine schematische Darstellung eines Ausführungsbeispiels einer erfindungsgemäßen Wäge-Fördervorrichtung;
- Figur 2: ein erstes Ausführungsbeispiel einer Trägereinrichtung;
- Figur 3: eine vergrößerte Darstellung des Bereichs A gemäß Figur 2; und
- Figur 4: ein zweites Ausführungsbeispiel einer Trägereinrichtung.

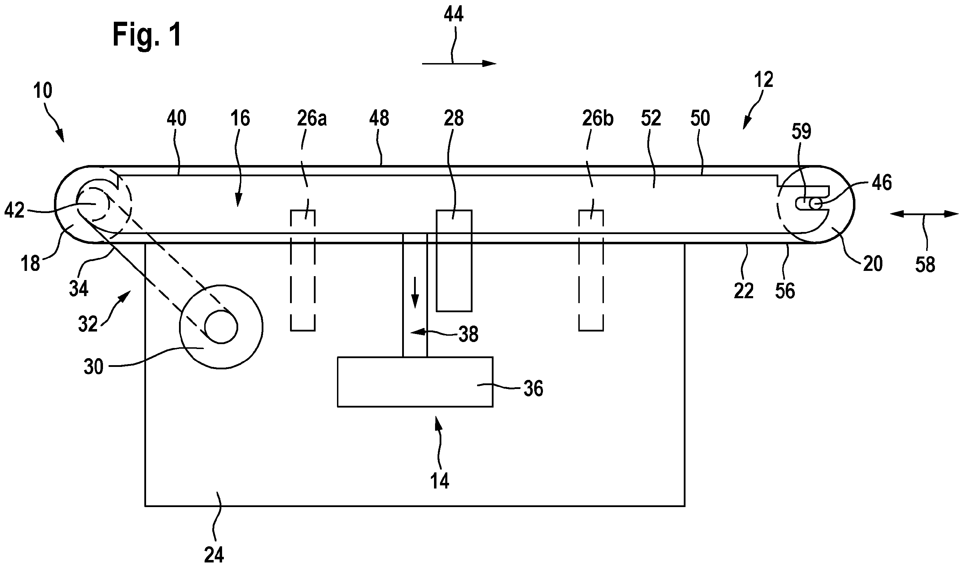

Ein Ausführungsbeispiel einer erfindungsgemäßen Wäge-Fördervorrichtung, welches in Figur 1 gezeigt und dort mit 10 bezeichnet ist, umfasst eine Fördereinrichtung 12 und eine Wägeeinrichtung 14. Durch die Fördereinrichtung 12 lässt sich Wägegut, welches auf der Fördereinrichtung 12 aufgelegt ist, transportieren und während des Transports lässt sich das Gewicht des Wägeguts, welches durch die Fördereinrichtung 12 transportiert wird, durch die Wägeeinrichtung 14 bestimmen. (Die Gewichtsbestimmung kann während der Transportphase erfolgen oder der Transportvorgang kann zur Gewichtsbestimmung kurz angehalten werden.)

Die Fördereinrichtung 12 umfasst eine als Ganzes mit 16 bezeichnete Trägereinrichtung. An der Trägereinrichtung 16 sind eine erste Transportwalze 18 und eine zweite Transportwalze 20 gehalten. An diesen Transportwalzen 18 und 20 ist ein Förderband 22 geführt. Das Förderband 22 ist als Endlosgurt ausgebildet.

Die Trägereinrichtung 16 ist an einem Gestell 24 gehalten. Sie ist beispielsweise über Zungen 26a, 26b an dem Gestell 24 fixiert, wobei diese Fixierung über beispielsweise einen Klemmhebel 28 sicherbar und lösbar ist.

An dem Gestell 24 ist ein Antriebsmotor 30 angeordnet, welcher über eine Getriebeeinrichtung 32 die erste Transportwalze 18 in einer Rotationsbewegung antreibt. Die Getriebeeinrichtung 32 ist beispielsweise mittels eines Zahnriemens 34 gebildet.

Die Wägeeinrichtung 14 umfasst eine Wägezelle 36, welche an dem Gestell 24 angeordnet ist. Die Trägereinrichtung 16 wirkt über einen Kopplungsmechanismus 38 auf die Wägezelle 36. Die Trägereinrichtung 16 wirkt mit ihrer Gewichtskraft über den Kopplungsmechanismus 38 auf die Wägezelle 36 und stellt dadurch eine Vorlast für die Wägezelle 36 dar. Wenn Wägegut auf der Trägereinrichtung 16 aufgelegt ist, dann erfährt die Wägezelle 36 die Gewichtskraft der Trägereinrichtung 16 und die Gewichtskraft des Wägeguts (Summen-Gewichtskraft). Eine Steuerungseinrichtung (in der Zeichnung nicht gezeigt) bestimmt die Gewichtswerte für Wägegut unter Berücksichtigung der Vorlast.

Der Kopplungsmechanismus 38 ist beispielsweise eine entsprechende Hebelmechanik. Es ist auch möglich, dass die Trägereinrichtung 16 direkt auf die Wägezelle 36 wirkt.

Die Wäge-Fördervorrichtung 10 ist vorzugsweise so ausgebildet, dass die Trägereinrichtung 16 nach Lösen des Klemmhebels 28 von dem Gestell 24 als Ganzes abnehmbar ist, wobei mit Lösung des Klemmhebels 28 auch die Kopplung zwischen der Wägezelle 36 und der Trägereinrichtung 16 lösbar ist. Die Trägereinrichtung 16 lässt sich als Einheit reinigen und beispielsweise in einer Spülmaschine positionieren.

Die Trägereinrichtung 16 umfasst einen einstückigen zusammenhängenden Trägerkörper 40, an welchem die erste Transportwalze 18 und die zweite Transportwalze 20 angeordnet sind. Die erste Transportwalze 18 ist dabei um eine Rotationsachse 42 drehbar, welche senkrecht zu einer Transportrichtung 44 von Wägegut orientiert ist. Die zweite Transportwalze 20 ist vorzugsweise ebenfalls um eine Rotationsachse 46 rotierbar, welche senkrecht zur Transportrichtung 44 ist. Die Rotationsachsen 46 und 42 sind parallel.

Das Förderband 22 ist mit einem oberen Förderbandtrum 48 an einer Oberseite 50 des Trägerkörpers 40 geführt. Diese Oberseite 50 bildet eine Gleitfläche für das obere Förderbandtrum 48 und stützt das Förderband 22. Wägegut wird auf das obere Förderbandtrum 48 aufgelegt und über das obere Förderbandtrum 48 in der Transportrichtung 44 transportiert.

Beabstandet zu einer Unterseite 52 des Trägerkörpers 40 ist ein unteres Förderbandtrum 56 zwischen der zweiten Transportwalze 20 und der ersten Transportwalze 18 geführt. Das Gestell 24 weist entsprechende Ausnehmungen bzw. Öffnungen auf, durch welche das untere Förderbandtrum 56 geführt ist.

Die zweite Transportwalze 20 ist feststellbar verschieblich an dem Trägerkörper 40 angeordnet, wobei eine entsprechende Verschiebungsrichtung 58 parallel zur Transportrichtung 44 ist. Dazu sind beispielsweise Langlöcher 59 oder Schlitze vorgesehen; die zweite Transportwalze 20 ist beispielsweise über einen Exzentermechanismus an dem Trägerkörper 40 fixierbar. Über diese feststellbare Verschieblichkeit der zweiten Transportwalze 20 lässt sich der Abstand dieser zweiten Transportwalze 20 zu der ersten Transportwalze 18 einstellen. Dadurch lässt sich das endlose Förderband 22 zwischen der ersten Transportwalze 18 und der zweiten Transportwalze 20 spannen.

Ein Exzenter des Exzentermechanismus ist dazu direkt auf einer Welle der zweiten Transportwalze 20 angeordnet. Über einen Spannhebel ist er gegen einen verstellbaren Anschlag drehbar. Der Exzenter ist insbesondere über entsprechende Exzenterteile beidseitig an der Welle positioniert.

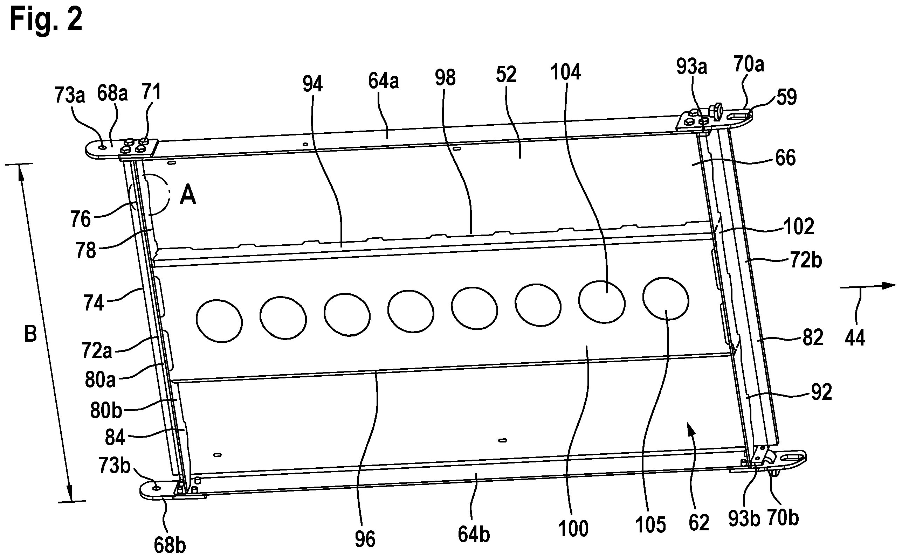

Ein erstes Ausführungsbeispiel einer Trägereinrichtung, welche in Figur 2 ohne Transportwalzen gezeigt ist und dort mit 60 bezeichnet ist, umfasst einen Trägerkörper 62. Dieser Trägerkörper 62 ist aus einem (einzigen) Metallblech hergestellt. Insbesondere ist er aus einem Edelstahl-Blech hergestellt. Die Dicke dieses Metallblechs liegt unterhalb von ca. 4 mm und insbesondere unterhalb von ca. 2 mm. Bei einer konkreten Ausführungsform betrug die Dicke 1,5 mm.

Die Breite B des Trägerkörpers 62 quer zur Transportrichtung 44 beträgt mindestens 100 mm.

Die Oberseite 50 dieses Trägerkörpers 62 ist mit einer Einhüllenden eben ausgebildet, um eine Gleitfläche für das Förderband 22 bereitzustellen. Die Abweichung von der Ebenheit beträgt höchstens 0,3 mm. Insbesondere liegt sie unterhalb 0,1 mm. An der Oberseite 50 können Vertiefungen beispielsweise in der Form von Riffelungen angeordnet sein, um ein Festsaugen des Förderbands 22 zu verbinden.

An dem Trägerkörper 62 sind gegenüberliegend eine erste Seitenwange 64a und eine zweite Seitenwange 64b angeordnet. Die erste Seitenwange 64a und die zweite Seitenwange 64b liegen parallel zueinander beabstandet. Die erste Seitenwange 64a und die zweite Seitenwange 64b stehen quer und insbesondere senkrecht zu der Oberseite 50 des Trägerkörpers 62 von dieser weg. Der Trägerkörper 62 mit den Seitenwangen 64a und 64b hat ein U-förmiges oder C-förmiges Profil mit einer Profilerstreckungsrichtung parallel zur Transportrichtung 44.

Die Seitenwangen 64a, 64b sind einstückig an dem Trägerkörper 62 gebildet. Sie sind an dem Trägerkörper 62 insbesondere durch Umbiegung hergestellt.

Die Seitenwangen 64a, 64b bilden gegenüberliegende seitliche Enden des Trägerkörpers 62. Sie sind im Wesentlichen parallel zur Transportrichtung 44 orientiert.

Der Trägerkörper 62 hat eine einstückig zusammenhängende Trägerplatte 66, an welcher die Seitenwangen 64a, 64b angeordnet sind. Die Seitenwangen 64a, 64b bilden die seitlichen Enden (bezogen auf die Transportrichtung 44 linken und rechten seitlichen Enden des Trägerkörpers 62). An den Seitenwangen 64a, 64b sind jeweilige Fixierungsbereiche 68a, 70a, 68b, 70b angeordnet, welche sich über die Trägerplatte 66 hinaus erstrecken, das heißt die Seitenwangen 64a, 64b mit den Fixierungsbereichen 68a, 68b, 70a, 70b sind an beiden Stirnenden länger als die Trägerplatte 66. An den Fixierungsbereichen 68a, 68b lässt sich die erste Transportwalze 18 fixieren und an den Fixierungsbereichen 70a, 70b lässt sich die zweite Transportwalze 20 fixieren.

Die Fixierungsbereiche 68a, 68b, 70a, 70b sind aus einem Blechmaterial hergestellt (wie beispielsweise Edelstahl-Blech), welches eine größere Dicke aufweist als das Blechmaterial der Trägerplatte 66. Die Fixierungsbereiche 68a, 68b, 70a, 70b sind über jeweilige Schraubverbindungen 71 mit den zugeordneten Seitenwangen verbunden; die Fixierungsbereiche 68a und 70a sind mit der ersten Seitenwange 64a verschraubt und die Fixierungsbereiche 68b und 70b sind mit der zweiten Seitenwange 64b verschraubt.

Die Fixierungsbereiche 68a, 68b weisen jeweilige Durchgangsöffnungen 73a, 73b auf, welche zur Aufnahme von entsprechenden Stiften der ersten Transportwalze 18 dienen.

Die Fixierungsbereiche 70a, 70b weisen ein Langloch oder einen Schlitz wie oben beschrieben auf. Es wird hier das gleiche Bezugszeichen 59 verwendet.

Zu der ersten Transportwalze 18 hin und zur zweiten Transportwalze 20 hin ist die Trägerplatte 66 jeweils über eine Leiste 72a, 72b abgekantet. Die Leisten 72a, 72b weisen von der Oberseite 50 weg zu der Unterseite 52 des Trägerkörpers 62 und liegen in einem Winkel von beispielsweise 5° zur Trägerplatte 66. Durch die abgekantete Leisten 72a, 72b wird der Zwischenraum zwischen der Trägerplatte 66 und der ersten Transportwalze 18 (Leiste 72a) und zwischen der Trägerplatte 66 und der zweiten Transportwalze 20 (Leiste 72b) überbrückt. Die Abkantung verhindert ein Reiben des Förderbands 22 an der Stirnkante der Trägerplatte 66 und ermöglicht ein geräuschloseres Anlaufen des Förderbands 22.

An einem stirnseitigen ersten Ende 74 des Trägerkörpers 62 ist eine erste Querstrebe 76 angeordnet. Diese ist mit der Unterseite 52 des Trägerkörpers 62 verbunden und jeweils mit der ersten Seitenwange 64a und der zweiten Seitenwange 64b verbunden. Sie ist quer und insbesondere senkrecht zu den Seitenwangen 64a, 64b orientiert und erstreckt sich zwischen diesen; dadurch ist sie auch quer und insbesondere senkrecht zur Transportrichtung 44 orientiert.

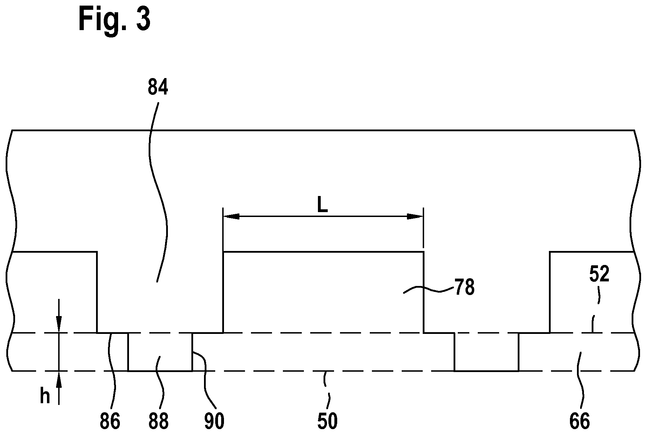

Die erste Querstrebe 76 weist Freibereiche 78 (Figur 3) auf, welche von einer ersten Seite 80a zu einer zweiten Seite 80b der ersten Querstrebe 76 durchgehend sind. Die erste Seite 80a ist in Richtung des stirnseitigen ersten Endes 74 orientiert und die zweite Seite 80b ist in Richtung eines stirnseitigen zweiten Endes 82 des Trägerkörpers 62 (der Trägerplatte 66) orientiert, wobei das stirnseitige zweite Ende 82 von dem stirnseitigen ersten Ende 74 abgewandt ist. Die durchgehenden Freibereiche 78 erstrecken sich dabei bis zu der Unterseite 52 der Trägerplatte 66, so dass an den Freibereichen 78 zwischen der Unterseite 52 der Trägerplatte 66 und der ersten Querstrebe 76 eine Öffnung gebildet ist.

Zwischen beabstandeten Freibereichen 78 weist die erste Querstrebe 76 jeweils eine Brücke 84 auf, über welche sie mit dem Trägerkörper 62 verbunden ist.

Der Abstand benachbarter Brücken 84 quer zur Transportrichtung 44 entspricht einer Länge L (Figur 3) eines Freibereichs 78. Diese Länge L ist größer 4 mm und vorzugsweise beträgt diese Länge L mindestens 5 mm.

Die jeweiligen Brücken 84 weisen einen insbesondere ebenen Anlagebereich 86 auf, über welchen sie an der Unterseite 52 der Trägerplatte 66 angelegt sind. Über diesen Anlagebereich 86 sind sie mit der Trägerplatte 66 verschweißt. Die Schweißverbindung wird insbesondere über Laserschweißen hergestellt.

Es kann vorgesehen sein, dass eine Brücke 84 einen Zapfen 88 aufweist. Die Trägerplatte 66 weist jeweils an die Zapfen 88 angepasste Ausnehmungen 90 auf, in welchen die jeweiligen Zapfen 88 positioniert sind. Ein Zapfen 88 hat dabei eine Höhe h, welche höchstens so groß ist wie die Dicke der Trägerplatte 66 im Bereich der Ausnehmung 90.

Die Zapfen 88 sind an den Ausnehmungen 90 verschweißt. Die Verschweißung erfolgt dabei insbesondere (auch) von einer Oberseite 50 der Trägerplatte 66 her.

Die erste Querstrebe 76 ist mit der ersten Seitenwange 64a und der zweiten Seitenwange 64b verbunden. Bei der Verbindung handelt es sich um eine Schweißverbindung. Zusätzlich kann noch eine Zapfen-Ausnehmungs-Verbindung vorgesehen sein, wie im Zusammenhang mit dem Zapfen 88 und den Ausnehmungen 90 beschrieben.

An dem stirnseitigen zweiten Ende 82 der Trägerplatte 66 ist eine zweite Querstrebe 92 angeordnet, welche grundsätzlich gleich ausgebildet ist wie die erste Querstrebe 76, und welche auf die gleiche Weise mit dem Trägerkörper 62 mit den Seitenwangen 64a, 64b und der Trägerplatte 66 verbunden ist.

Die Fixierungsbereiche 70a, 70b können mit den Seitenwangen 64a, 64b zusätzlich über Haltestege 93a, 93b verbunden sein. Die Verbindung ist dabei insbesondere eine Schraubverbindung. Diese Haltestege 93a, 93b können zusätzlich auch noch mit der zweiten Querstrebe 92 beispielsweise über Verschweißung verbunden sein. Die Haltestege 93a, 93b sind an dem jeweiligen Fixierungsbereich 70a, 70b fest angeordnet.

Zwischen der ersten Querstrebe 76 und der zweiten Querstrebe 92 sind eine erster Stabilisierungsstrebe 94 und ein zweite Stabilisierungsstrebe 96 angeordnet. Die Stabilisierungsstreben 94 und 96 dienen zur Erhöhung der Biegesteifigkeit und der Torsionssteifigkeit des Trägerkörpers 62. Ferner wird durch sie eine hohe Ebenheit der Trägerplatte 66 auch bei Belastung erreicht. Die erste Stabilisierungsstrebe 94 und die zweite Stabilisierungsstrebe 96 sind sowohl mit der ersten Querstrebe 76 als auch mit der zweiten Querstrebe 92 verbunden. Weiterhin sind sie mit der Unterseite 52 der Trägerplatte 66 verbunden. Sie erstrecken sich zwischen der ersten Querstrebe 76 und der zweiten Querstrebe 92 in einer Richtung, welche im Wesentlichen parallel zur Transportrichtung 44 ist.

Es können auch noch weitere Stabilisierungsstreben vorgesehen sein.

Die Verbindung der Stabilisierungsstreben 94 und 96 mit der Trägerplatte 66 und den Querstreben 76 und 92 erfolgt über Verschweißung. Zusätzlich können noch Zapfen-Ausnehmungs-Verbindungen wie oben im Zusammenhang mit der ersten Querstrebe 76 beschrieben vorhanden sein.

Die erste Querstrebe 76, die zweite Querstrebe 92, die erste Stabilisierungsstrebe 94 und die zweite Stabilisierungsstrebe 96 sind aus einem Metallblech und insbesondere Edelstahl-Blech hergestellt. Sie können die gleiche Dicke aufweisen wie das Metallblech des Trägerkörpers 62 oder dicker sein.

Die Stabilisierungsstreben 94 und 96 weisen Freibereiche 98 auf, welche sich bis zur Unterseite 52 der Trägerplatte 66 erstrecken. Diese Freibereiche 98 sind dabei grundsätzlich gleich ausgebildet wie die Freibereiche 78. Die erste Stabilisierungsstrebe 94 und die zweite Stabilisierungsstrebe 96 sind durch einen Verbindungssteg 100 einstückig miteinander zu einer Strebenkombination verbunden.

Der Verbindungssteg 100 ist parallel beabstandet zu der Unterseite 52 der Trägerplatte 66 positioniert. Er ist dabei insbesondere mit einem oberen Bereich 102 sowohl der ersten Querstrebe 76 als auch der zweiten Querstrebe 92 verbunden.

Der Verbindungssteg 100 ist symmetrisch zu den äußeren Rändern des Trägerkörpers 62 angeordnet. Die Kombination aus dem Verbindungssteg 100 und den Stabilisierungsstreben 94 und 96 ist mittig zu einer Querrichtung zu der Transportrichtung 44 angeordnet. Dadurch wird der Trägerkörper 62 in einem mittleren Bereich gestützt, in welchem eine neutrale Faser liegt. Dadurch ergibt sich eine hohe Torsionssteifigkeit.

Die Strebenkombination mit dem Verbindungssteg 100 und den Stabilisierungsstreben 94 und 96 ist aus einem Blechmaterial hergestellt, wobei die Stabilisierungsstreben 94, 96 quer und insbesondere senkrecht zu dem Verbindungssteg 100 stehen. Die Strebenkombination hat ein U- oder C-Profil.

Der Verbindungssteg 100 weist eine Mehrzahl von beabstandeten und insbesondere in einer Reihe angeordneten durchgehenden Ausnehmungen 104 auf. Durch diese Ausnehmungen ist ein Raum 105 zwischen der Trägerplatte 66, der ersten Stabilisierungsstrebe 94, der zweiten Stabilisierungsstrebe 96 und dem Verbindungssteg 100 nach außen hin offen, so dass kein geschlossener Hohlraum gebildet ist.

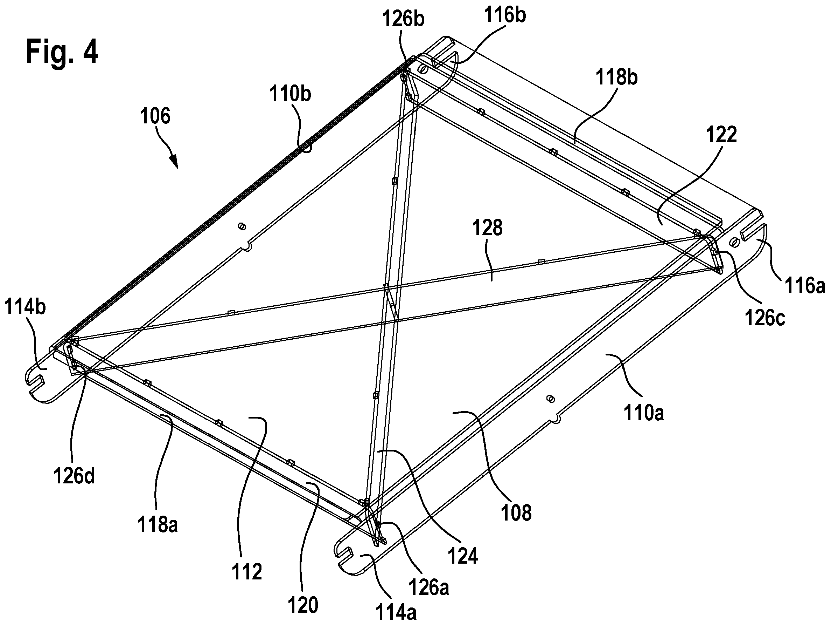

Ein zweites Ausführungsbeispiel einer Trägereinrichtung, welches in Figur 4 gezeigt und dort mit 106 bezeichnet ist, weist einen Trägerkörper 108 mit Seitenwangen 110a, 110b auf, welche quer zur Trägerplatte 108 angeordnet sind.

Die Seitenwangen 110a, 110b sind quer zu einer Trägerplatte 112 positioniert. Diese Anordnung entspricht der Anordnung der Seitenwangen 64a und 64b des Trägerkörpers 62.

An der Seitenwange 110a sind Fixierungsbereiche 114a, 116a für die erste Transportwalze und die zweite Transportwalze angeordnet. Diese Fixierungsbereiche 114a, 116a sind dabei einstückig mit der Seitenwange 110a verbunden.

Auf die gleiche Weise sind Fixierungsbereiche 114b und 116b an der Seitenwange 110b gebildet. Die Fixierungsbereiche 114a, 114b, 116a, 116b ragen dabei über die Trägerplatte 112 hinaus. An ihrem stirnseitigen Ende ist die Trägerplatte 112 dabei mit jeweiligen Leisten 118a, 118b versehen, welche nach unten geneigt sind oder mittels einer Abrundung/Abschrägung gebildet sind. Diese Leisten 118a, 118b decken den Zwischenraum zwischen den jeweiligen Transportwalzen und der Trägerplatte 112 ab.

Ferner sind an dem Trägerkörper 108 stirnseitige Querstreben 120, 122 angeordnet, welche auf die gleiche Art und Weise positioniert sind und ausgebildet sind wie die Querstreben 76 und 92.

Die Trägereinrichtung 106 umfasst eine erste Stabilisierungsstrebe 124, welcher an der Unterseite des Trägerkörpers 108 angeordnet ist und diagonal ausgerichtet ist. Sie ist damit eine Diagonal-Stabilisierungsstrebe. Diese erste Stabilisierungsstrebe 124 ist in einem Eckbereich 126a über Verschweißen und fakultativ zusätzlich über eine Zapfen-Ausnehmung-Verbindung mit der Seitenwange 110a verbunden. Sie kann in diesem Eckbereich 126a auch mit der ersten Querstrebe 120 verbunden sein. Ferner ist die erste Stabilisierungsstrebe 124 in einem zweiten Eckbereich 126b mit der Seitenwange 110b verbunden. Sie kann zusätzlich auch mit der zweiten Querstrebe 122 verbunden sein.

Weiterhin ist eine zweite Diagonal-Stabilisierungsstrebe 128 vorgesehen, welche in einem dritten Eckbereich 126c mit der Seitenwange 110a und fakultativ mit dem Querträger 122 verbunden ist. In einem vierten Eckbereich 126d ist die zweite Stabilisierungsstrebe 128 mit der Seitenwange 110b verbunden und fakultativ mit dem Querträger 120 verbunden.

Die erste Stabilisierungsstrebe 120 und die zweite Stabilisierungsstrebe 128 sind an ihrem Schnittbereich über einen Verbindungsbereich 130 verbunden. Die Verbindung hier erfolgt insbesondere über Verschweißung. Durch diese Verbindung lässt sich ein Ausknicken verhindern. Der Verbindungsbereich 130 ist dabei mittig an dem Trägerkörper 108 bezogen auf eine Querrichtung zur Transportrichtung 44. Der Verbindungsbereich 130 stützt dadurch den Trägerkörper 108 mittig auf der neutralen Faser. Dadurch erhält man eine hohe Torsionssteifigkeit.

Bei einem dritten Ausführungsbeispiel einer Trägereinrichtung (in der Zeichnung nicht gezeigt) ist ein stirnseitiger Querträger oder sind beide stirnseitigen Querträger einstückig an der entsprechenden Trägerplatte angeformt und durch Umbiegung hergestellt. Der oder diese Querträger sind dann insbesondere über Verschweißung mit den Seitenwangen verbunden.

Eine erfindungsgemäße Trägereinrichtung wird so hergestellt, dass zunächst der Trägerkörper aus einem Metallblech (wie Edelstahl-Blech) hergestellt wird. Die Seitenwangen werden durch Umbiegen hergestellt.

Anschließend werden die Querstreben und die Stabilisierungsstreben an dem Trägerkörper fixiert. Falls eine Querstrebe einstückig mit dem Trägerkörper verbunden ist, wird sie durch Umbiegung hergestellt und mit den Seitenwangen verbunden. Gegebenenfalls werden Fixierungsbereiche für Transportwalzen an den Seitenwangen positioniert.

Die Schweißverbindungen zwischen den verschiedenen Bauteilen werden durch Laserschweißen hergestellt. Der Schweißvorgang wird dabei möglichst verzugsfrei durchgeführt, so dass Dünnblechmaterialien zur Herstellung des Trägerkörpers verwendbar sind. Insbesondere lässt sich dabei die Ebenheit der Trägerplatte garantieren. Vorzugsweise wird der Laserschweißvorgang so durchgeführt, dass es nur zu punktuellen Erwärmungen kommen kann und damit auch nicht zu Verformungen in einem Randzonenbereich einer Schweißnaht.

Erfindungsgemäß wird eine Trägereinrichtung bereitgestellt, bei welcher sich ein Trägerkörper als Dünnblechauflageplatte realisieren lässt. Der Trägerkörper unterstützt den oberen Förderbandtrum 48 und stützt dadurch das Wägegut.

Der Trägerkörper 62 bzw. 108 ist als eine Art Wanne mit den Seitenwangen 64a, 64b und den stirnseitigen Querstreben 76, 92 bzw. 120, 122 realisiert. Der Trägerkörper lässt sich mit geringem Gewicht, eben, biegesteif, torsionssteif und kostengünstig herstellen, wobei er hinsichtlich Hygieneanforderungen sehr vorteilhaft ausgebildet ist.

Die Stabilisierungsstreben 94, 96 bzw. 124 und 128 sorgen für eine hohe Torsions- und Biegesteifigkeit. Durch die Querstreben und die Stabilisierungsstreben wird die Trägerplatte punktförmig gestützt und positioniert, um deren Ebenheit an ihrer oberen Oberfläche zu garantieren. Durch die Stützung lässt sich die Trägerplatte mit einem relativ dünnen Blechmaterial herstellen. Auch bei dünnem Blechmaterial lässt sich die Ebenheit garantieren, so dass Beschleunigungskräfte für das Förderband 22 vermieden sind, welche zu einer Verfälschung der Gewichtsmessung führen können.

Der Trägerkörper lässt sich mit einer minimierten Anzahl von Materialüberlappungen herstellen. Es lässt sich eine offene Struktur ohne Hinterschnitte und Labyrinthe erreichen. Dadurch lässt sich das Bilden von Bakteriennestern verhindern und die entsprechende Trägereinrichtung lässt sich auf einfache Weise reinigen.

Da sich der Trägerkörper mit geringem Gewicht ausbilden lässt, lässt sich auch die Vorlast auf die Wägeeinrichtung 14 aufgrund der Trägereinrichtung 16 gering halten.

Es lassen sich nichtkorrosive Materialien wie Edelstahl einsetzen.

Eine Anwendung beispielsweise auch im Lebensmittelbereich oder im Pharmabereich ist möglich, da der Bereich, an denen Bakteriennester bildbar sind, minimiert sind und der entsprechende Trägerkörper gut reinigbar ist. Sämtliche Oberflächen sind zugänglich und es gibt keine versteckten Hohlräume. Die Überlappung von Metallflächen lässt sich minimieren.

Es müssen keine Klebeverbindungen vorgesehen werden und es ist auch keine Sandwichstruktur bzw. ein Hohlkörper notwendig.

Durch die Freibereiche 78, 98 lässt sich der mechanische Kontakt zwischen den Querstreben und der Trägerplatte gering halten. Dadurch wird die Geräuschentwicklung beim Vibrieren des Trägerkörpers 62 gering gehalten. Weiterhin lässt sich dadurch der Trägerkörper gut reinigen und es lässt sich der Bildung von Bakteriennestern entgegenwirken.

## Patentansprüche

1. Wäge-Fördervorrichtung zum Wiegen und zum Transport von Wägegut, mit einer Fördereinrichtung (12), auf welcher Wägegut positionierbar ist, und einer Wägeeinrichtung (14), durch welche das Gewicht von Wägegut auf der Fördereinrichtung (12) ermittelbar ist, wobei die Fördereinrichtung (12) ein Förderband (22), eine Trägereinrichtung (16), an welcher das Förderband (22) geführt ist, und mindestens eine Transportwalze (18; 20) für das Förderband (22) aufweist,
**dadurch gekennzeichnet , dass** die Trägereinrichtung (16) einen Trägerkörper (62) mit einer Trägerplatte (66) aufweist, an welcher gegenüberliegende Seitenwangen (64a, 64b) gebildet sind, wobei der Trägerkörper (62) mit der Trägerplatte (66) und den Seitenwangen (64a, 64b) aus einem einzigen Metallblech hergestellt ist, und dass durch die gegenüberliegenden Seitenwangen (64a, 64b) die mindestens eine Transportwalze (18; 20) gehalten ist, dass an dem Trägerkörper (62) Stabilisierungsstreben (94, 96) angeordnet sind, wobei eine erste Stabilisierungsstrebe (94) und eine zweite Stabilisierungsstrebe (96) jeweils mit gegenüberliegenden stirnseitigen Querstreben (76, 92) verbunden ist und zwischen der ersten Stabilisierungsstrebe (94) und der zweiten Stabilisierungsstrebe (96) ein Verbindungssteg (100) angeordnet ist, welcher mit der ersten Stabilisierungsstrebe (94) und der zweiten Stabilisierungsstrebe (96) verbunden ist, dass die erste Stabilisierungsstrebe (94), der Verbindungssteg (100) und die zweite Stabilisierungsstrebe (96) einstückig zu einer Strebenkombination verbunden sind, dass die Strebenkombination ein U-Profil oder C-Profil mit einer Profilerstreckungsrichtung im Wesentlichen parallel zu einer Transportrichtung (44) hat, und dass der Verbindungssteg (100) mindestens eine durchgehende Ausnehmung (104) aufweist, durch welche ein Raum (105), welcher durch den Trägerkörper (62), die erste Stabilisierungsstrebe (94), die zweite Stabilisierungsstrebe (96) und den Verbindungssteg (100) begrenzt ist, nach außen offen ist.

2. Wäge-Fördervorrichtung nach Anspruch 1, **dadurch gekennzeichnet, dass** die Seitenwangen (64a, 64b) durch Biegung und/oder Abkanten des Metallblechs hergestellt sind.

3. Wäge-Fördervorrichtung nach einem der vorangehenden Ansprüche, **dadurch gekennzeichnet, dass** an den Seitenwangen (64a, 64b) jeweils ein Fixierungsbereich (68a, 68b; 70a, 70b) angeordnet oder gebildet ist, welcher über die Trägerplatte (66) des Trägerkörpers (62) zur Fixierung der mindestens einen Transportwalze (18; 20) hinausragt, und insbesondere, dass ein Fixierungsbereich (68a; 68b; 70a; 70b) aus einem Material mit größerer Dicke als die Trägerplatte (66) hergestellt ist.

4. Wäge-Fördervorrichtung nach einem der vorangehenden Ansprüche, **dadurch gekennzeichnet, dass** der Trägerkörper (62) mit den Seitenwangen (64a, 64b) ein C-Profil oder U-Profil hat.

5. Wäge-Fördervorrichtung nach einem der vorangehenden Ansprüche, **dadurch gekennzeichnet, dass** im Bereich eines stirnseitigen Endes (74) des Trägerkörpers (62) eine Querstrebe (76; 92) angeordnet ist, welche mit den Seitenwangen (64a, 64b) verbunden ist und sich zwischen den Seitenwangen (64a, 64b) erstreckt, und insbesondere, dass die Querstrebe (76; 92) mit den Seitenwangen (64a, 64b) verschweißt oder verklebt ist, und insbesondere, dass die Querstrebe (76; 92) einstückig mit dem Trägerkörper (62) verbunden ist, und insbesondere, dass die erste Querstrebe (76) und/oder die zweite Querstrebe (92) mit einer Unterseite (52) des Trägerkörpers (62) verbunden ist, und insbesondere, dass die Querstrebe (76, 92) im Bereich von Brücken (84) mit der Unterseite (52) des Trägerkörpers (62) verbunden ist, und insbesondere, dass die Querstrebe (76; 92) zu einer Unterseite (52) des Trägerkörpers (62) hin mindestens einen durchgehenden Freibereich (78) aufweist, und insbesondere, dass ein Freibereich (78) zwischen benachbarten Zapfen (88) und/oder Brücken (84) liegt, und insbesondere, dass die Querstrebe (76; 92) aus einem Metallblech hergestellt ist.

6. Wäge-Fördervorrichtung nach einem der vorangehenden Ansprüche, **dadurch gekennzeichnet, dass** an dem Trägerkörper (62) mindestens eine Stabilisierungsstrebe (124; 128) angeordnet ist, welche mit mindestens einer Seitenwange (64a; 64b) verbunden ist, und insbesondere, dass mindestens eine Diagonal-Stabilisierungsstrebe (124; 128) vorgesehen ist, und insbesondere, dass die mindestens eine Diagonal-Stabilisierungsstrebe (124; 128) mit einem Eckbereich (126a; 126b; 126c; 126d) der mindestens einen Seitenwange (64a; 64b) und/oder einem Eckbereich der mindestens einen Querstrebe (76; 92) verbunden ist, und insbesondere, dass eine erste Diagonal-Stabilisierungsstrebe (124) und ein zweite Diagonal-Stabilisierungsstrebe (128) vorgesehen sind, welche miteinander verbunden sind, und insbesondere, dass die erste Diagonal-Stabilisierungsstrebe (124) und die zweite Diagonal-Stabilisierungsstrebe (128) in einem Bereich verbunden sind, welcher bezogen auf eine Querrichtung zu einer Transportrichtung (44) den Trägerkörper (62) mittig stützt, und insbesondere, dass mindestens eine Stabilisierungsstrebe (94; 96; 124; 128) mit gegenüberliegenden stirnseitigen Querstreben (76, 92) verbunden ist.

7. Wäge-Fördervorrichtung nach einem der vorangehenden Ansprüche,
**dadurch gekennzeichnet, dass** der Verbindungssteg (100) mittig bezogen auf eine Querrichtung zu einer Transportrichtung (44) am Trägerkörper (62) angeordnet ist, und insbesondere, dass der Verbindungssteg (100) mit den stirnseitigen Querstreben (76, 92) verbunden ist.

8. Wäge-Fördervorrichtung nach Anspruch 6 oder 7, **dadurch gekennzeichnet, dass** die mindestens eine Stabilisierungsstrebe (94; 96; 124; 128) und/oder die mindestens eine Seitenwange (64a; 64b) und/oder die mindestens eine stirnseitige Querstrebe (76; 92) miteinander verschweißt oder verklebt sind.

9. Wäge-Fördervorrichtung nach einem der Ansprüche 6 bis 8, **dadurch gekennzeichnet, dass** die mindestens eine Stabilisierungsstrebe (94; 96; 124; 128) einen Freibereich (98) aufweist, welcher zu einer Unterseite (52) des Trägerkörpers (62) hin offen ist.

10. Wäge-Fördervorrichtung nach einem der Ansprüche 6 bis 9, **dadurch gekennzeichnet, dass** die mindestens eine Stabilisierungsstrebe (94; 96; 124; 128) über einen oder mehrere Zapfen über eine entsprechende Ausnehmung mit dem Trägerkörper (62) und/oder der mindestens einen Seitenwange (64a; 64b) und/oder der mindestens einen stirnseitigen Querstrebe (76; 92) verbunden ist.

11. Wäge-Fördervorrichtung nach einem der vorangehenden Ansprüche, **gekennzeichnet durch** einen Antriebsmotor (30) für das Förderband (22).

## Claims

1. Weighing/conveying apparatus for weighing and for transporting goods to be weighed, having a conveying device (12) on which goods to be weighed are positionable and a weighing device (14) by means of which the weight of the goods to be weighed on the conveying device (12) is determinable, wherein the conveying device (12) has a conveyor belt (22), a support device (16) on which the conveyor belt (22) is guided, and at least one transport roller (18; 20) for the conveyor belt (22), **characterized in that** the support device (16) has a support body (62) with a support plate (66) on which opposing side pieces (64a, 64b) are formed, wherein the support body (62) is produced with the support plate (66) and the side pieces (64a, 64b) from one single metal sheet, and **in that** the at least one transport roller (18; 20) is held by means of the opposing side pieces (64a, 64b), **in that** stabilization struts (94, 96) are arranged on the support body (62), wherein a first stabilization strut (94) and a second stabilization strut (96) are each connected to opposing face-side transverse struts (76, 92) and arranged between the first stabilization strut (94) and the second stabilization strut (96) is a connecting web (100) which is connected to the first stabilization strut (94) and the second stabilization strut (96), **in that** the first stabilization strut (94), the connecting web (100), and the second stabilization strut (96) are connected in one piece to form a strut combination, **in that** the strut combination has a U-profile or C-profile with a profile extension direction substantially in parallel to a transport direction (44), and **in that** the connecting web (100) has at least one continuous recess (104) by means of which a space (105), which is delimited by the support body (62), the first stabilization strut (94), the second stabilization strut (96), and the connecting web (100), is outwardly open.

2. Weighing/conveying apparatus in accordance with Claim 1, **characterized in that** the side pieces (64a, 64b) are produced by bending and/or bending over the metal sheet.

3. Weighing/conveying apparatus in accordance with any one of the preceding Claims, **characterized in that** arranged or formed on the side pieces (64a, 64b) is in each case a fixing region (68a, 68b; 70a, 70b) which protrudes beyond the support plate (66) of the support body (62) for fixing the at least one transport roller (18; 20), and in particular **in that** a fixing region (68a, 68b; 70a, 70b) is produced of a material with a greater thickness than the support plate (66).

4. Weighing/conveying apparatus in accordance with any one of the preceding Claims, **characterized in that** the support body (62) with the side pieces (64a, 64b) has a C-profile or U-profile.

5. Weighing/conveying apparatus in accordance with any one of the preceding Claims, **characterized in that** arranged in the region of a face-side end (74) of the support body (62) is a transverse strut (76; 92) which is connected to the side pieces (64a, 64b) and extends between the side pieces (64a, 64b), and in particular **in that** the transverse strut (76; 92) is welded or adhesively bonded to the side pieces (64a, 64b), and in particular **in that** the transverse strut (76; 92) is connected to the support body (62) in one piece, and in particular **in that** the first transverse strut (76) and/or the second transverse strut (92) is connected to an underside (52) of the support body (62), and in particular **in that** the transverse strut (76, 92) is connected to the underside (52) of the support body (62) in the region of bridges (84), and in particular **in that** the transverse strut (76; 92) has at least one continuous free region (78) toward an underside (52) of the support body (62), and in particular **in that** a free region (78) is located between adjacent pins (88) and/or bridges (84), and in particular **in that** the transverse strut (76; 92) is produced of a metal sheet.

6. Weighing/conveying apparatus in accordance with any one of the preceding Claims, **characterized in that** arranged on the support body (62) is at least one stabilization strut (124; 128) which is connected to at least one side piece (64a; 64b), and in particular **in that** at least one diagonal stabilization strut (124; 128) is provided, and in particular **in that** the at least one diagonal stabilization strut (124; 128) is connected to a corner region (126a; 126b; 126c; 126d) of the at least one side piece (64a; 64b) and/or to a corner region of the at least one transverse strut (76; 92), and in particular **in that** a first diagonal stabilization strut (124) and a second diagonal stabilization strut (128) are provided, which are connected to each other, and in particular **in that** the first diagonal stabilization strut (124) and the second diagonal stabilization strut (128) are connected in a region which centrally supports the support body (62) in relation to a transverse direction to a transport direction (44), and in particular **in that** at least one stabilization strut (94; 96; 124; 128) is connected to opposing face-side transverse struts (76, 92).

7. Weighing/conveying apparatus in accordance with any one of the preceding Claims, **characterized in that** the connecting web (100) is arranged centrally on the support body (62) in relation to a transverse direction to a transport direction (44), and in particular **in that** the connecting web (100) is connected to the face-side transverse struts (76, 92).

8. Weighing/conveying apparatus in accordance with Claim 6 or 7, **characterized in that** the at least one stabilization strut (94; 96; 124; 128) and/or the at least one side piece (64a; 64b) and/or the at least one face-side transverse strut (76; 92) are welded or adhesively bonded to each other.

9. Weighing/conveying apparatus in accordance with any one of Claims 6 to 8, **characterized in that** the at least one stabilization strut (94; 96; 124; 128) has a free region (98) which is open toward an underside (52) of the support body (62).

10. Weighing/conveying apparatus in accordance with any one of Claims 6 to 9, **characterized in that** the at least one stabilization strut (94; 96; 124; 128) is connected to the support body (62) and/or the at least one side piece (64a; 64b) and/or the at least one face-side transverse strut (76; 92) by way of one or a plurality of pins via a corresponding recess.

11. Weighing/conveying apparatus in accordance with any one of the preceding Claims, **characterized by** a drive motor (30) for the conveyor belt (22).

## Revendications

1. Dispositif de transport et de pesage pour le pesage et le transport de produits à peser, comprenant un système de transport (12) sur lequel les produits à peser peuvent être positionnés, et un système de pesage (14) qui permet de déterminer le poids des produits à peser disposés sur le système de transport (12), le système de transport (12) présentant une bande transporteuse (22), un système de support (16), sur lequel passe la bande transporteuse (22), et au moins un rouleau de transport (18 ; 20) destiné à la bande transporteuse (22), **caractérisé en ce que** le système de support (16) présente un corps de support (62) avec une plaque de support (66) sur laquelle sont aménagées des parois latérales opposées (64a, 64b), le corps de support (62) doté de la plaque de support (66) et des parois latérales opposées (64a, 64b) étant fabriqué à partir d'une seule tôle métallique, et **en ce que** les parois latérales opposées (64a, 64b) maintiennent l'au moins un rouleau de transport (18 ; 20), **en ce que** des entretoises de stabilisation (94, 96) sont disposées sur le corps de support (62), une première entretoise de stabilisation (94) et une deuxième entretoise de stabilisation (96) étant respectivement reliées à des entretoises transversales (76, 92) frontales opposées et une entretoise de liaison (94) étant disposée entre la première entretoise de stabilisation (94) et la deuxième entretoise de stabilisation (96) et reliée à la première entretoise de stabilisation (94) et à la deuxième entretoise de stabilisation (96), **en ce que** la première entretoise de stabilisation (94), l'entretoise de liaison (100) et la deuxième entretoise de stabilisation (96) sont reliées en une combinaison d'entretoises d'un seul tenant, **en ce que** la combinaison d'entretoises a un profil en U ou un profil en C dirigés pour l'essentiel parallèlement à un sens de transport (44), et **en ce que** l'entretoise de liaison (100) présente au moins un évidement traversant (104) grâce auquel un espace (105), délimité par le corps de support (62), la première entretoise de stabilisation (94), la deuxième entretoise de stabilisation (96) et l'entretoise de liaison (100), est ouvert vers l'extérieur.

2. Dispositif de transport et de pesage selon la revendication 1, **caractérisé en ce que** les parois latérales (64a, 64b) sont créées par le cintrage et/ou le pliage de la tôle métallique.

3. Dispositif de transport et de pesage selon l'une quelconque des revendications précédentes, **caractérisé en ce que**, sur les parois latérales (64a, 64b) est disposée ou aménagée une zone d'immobilisation (68a, 68b ; 70a, 70b) qui dépasse de la plaque de support (66) du corps de support (62) pour immobiliser l'au moins un rouleau de transport (18 ; 20) et, en particulier, **en ce qu'**une zone d'immobilisation (68a ; 68b : 70a ; 70b) est réalisée dans une matière plus épaisse que la plaque de support (66).

4. Dispositif de transport et de pesage selon l'une quelconque des revendications précédentes, **caractérisé en ce que** le corps de support (62) avec les parois latérales (64a, 64b) a un profil en C ou un profil en U.

5. Dispositif de transport et de pesage selon l'une quelconque des revendications précédentes, **caractérisé en ce que**, au niveau d'une extrémité frontale (74) du corps de support (62), une entretoise transversale (76 ; 92) est disposée et reliée aux parois latérales (64a, 64b) et s'étend entre les parois latérales (64a, 64b) et, en particulier, **en ce que** l'entretoise transversale (76 ; 92) est soudée ou collée aux parois latérales (64a, 64b) et, en particulier, **en ce que** l'entretoise transversale (76 ; 92) est reliée au corps de support (62) et forme une pièce d'un seul tenant et, en particulier, **en ce que** la première entretoise transversale (76) et/ou la deuxième entretoise transversale (92) est reliée au dessous (52) du corps de support (62) et, en particulier, **en ce que** l'entretoise transversale (76, 92) est reliée, au niveau de ponts (84), au dessous (52) du corps de support (62) et, en particulier, **en ce que** l'entretoise transversale (76 ; 92) présente, vers un dessous (52) du corps de support (62), au moins une zone libre traversante (78) et, en particulier, **en ce qu'**une zone libre (78) se trouve entre des tétons voisins (88) et/ou des ponts (84) et, en particulier, **en ce que** l'entretoise transversale (76 ; 92) est fabriquée dans une tôle mécanique.

6. Dispositif de transport et de pesage selon l'une quelconque des revendications précédentes, **caractérisé en ce que**, sur le corps de support (62), est disposée au moins une entretoise de stabilisation (124 ; 128) reliée à au moins une paroi latérale (64a ; 64b) et, en particulier, **en ce qu'**au moins une entretoise de stabilisation diagonale (124 ; 128) est prévue et, en particulier, **en ce que** l'au moins une entretoise de stabilisation diagonale (124 ; 128) est reliée à une zone d'angle (126a ; 126b ; 126c ; 126d) de l'au moins une paroi latérale (64a ; 64b) et/ou d'une zone d'angle de l'au moins une entretoise transversale (76 ; 92) et, en particulier, **en ce qu'**une première entretoise de stabilisation diagonale (124) et une deuxième entretoise de stabilisation diagonale (128) sont prévues et reliées entre elles et, en particulier, **en ce que** la première entretoise de stabilisation diagonale (124) et la deuxième entretoise de stabilisation diagonale (128) sont reliées dans une zone qui, par rapport à un sens transversal à un sens de transport (44), soutient le corps de support (62) au milieu et, en particulier, **en ce qu'**au moins une entretoise de stabilisation (94 ; 96 ; 124 ; 128) est reliée à des entretoises transversales frontales opposées (76, 92) .

7. Dispositif de transport et de pesage selon l'une quelconque des revendications précédentes, **caractérisé en ce que** l'entretoise de liaison (100) est disposée au milieu du corps de support (62) par rapport à un sens transversal à un sens de transport (44) et, en particulier, **en ce que** l'entretoise de liaison (100) est reliée aux entretoises transversales frontales (76, 92) .

8. Dispositif de transport et de pesage selon la revendication 6 ou la revendication 7, **caractérisé en ce que** l'au moins une entretoise de stabilisation (94 ; 96 ; 124 ; 128) et/ou l'au moins une paroi latérale (64a ; 64b) et/ou l'au moins une entretoise transversale frontale (76 ; 92) sont soudées ou collées ensemble.

9. Dispositif de transport et de pesage selon l'une quelconque des revendications 6 à 8, **caractérisé en ce que** l'au moins une entretoise de stabilisation (94 ; 96 ; 124 ; 128) présente une zone libre ouverte vers un dessous (52) du corps de support (62).

10. Dispositif de transport et de pesage selon l'une quelconque des revendications 6 à 9, **caractérisé en ce que** l'au moins une entretoise de stabilisation (94 ; 96 ; 124 ; 128) est reliée, au moyen d'un ou plusieurs tétons, par le biais d'un évidement correspondant, au corps de support (62) et/ou l'au moins une paroi latérale (64a ; 64b) et/ou l'au moins une entretoise transversale frontale (76 ; 92).

11. Dispositif de transport et de pesage selon l'une quelconque des revendications précédentes, **caractérisé par** un moteur d'entraînement (30) destiné à la bande transporteuse (22).
